# FASCICULE DE BREVET EUROPEEN

(11) **EP 1 056 344 B1**
(45) Date de publication et mention de la délivrance du brevet: **17.09.2003**
(21) Numéro de dépôt: 99904910.9
(22) Date de dépôt: 19.02.1999
(51) Int. Cl.: A21C 9/06

(54) **PROCEDE DE FABRICATION D'UN PRODUIT ALIMENTAIRE, A BASE DE PATE A PIZZA, DU GENRE PIZZA, PRODUIT ALIMENTAIRE OBTENU ET INSTALLATION DE FABRICATION**
VERFAHREN ZUR HERSTELLUNG EINES NAHRUNGSMITTELS AUF BASIS VON PIZZATEIG, NACH PIZZA-ART, DAS ERHALTENE NAHRUNGSMITTEL UND ANLAGE ZUR HERSTELLUNG
METHOD FOR MAKING A FOOD PRODUCT SUCH AS PIZZA, WITH A PIZZA PASTRY BASE, AND RESULTING FOOD PRODUCT AND INSTALLATION FOR MAKING SAME

(30) Priorité: 19.02.1998 FR 9802227
(43) Date de publication de la demande: 06.12.2000
(73) Titulaire: Nectoux, Claude, 69110 Sainte Foy les Lyon (FR)
(72) Inventeur: Nectoux, Claude, 69110 Sainte Foy les Lyon (FR)
(74) Mandataire: Martin, Didier
(86) Numéro de dépôt international: FR9900374
(87) Numéro de publication internationale: WO99041988

(56) Documents cités:
- WO-A-89/00008
- WO-A-93/00013
- FR-A- 2 741 779
- GB-A- 1 395 170
- GB-A- 2 305 350
- US-A- 2 969 025
- US-A- 3 354 842
- US-A- 4 618 498
- US-A- 4 797 291
- US-A- 5 112 631

## Description

### DOMAINE TECHNIQUE DE L'INVENTION

La présente invention se rapporte au domaine des produits alimentaires, du genre pizza, tarte, quiche par exemple, comprenant une enveloppe de pâte à base de pâte à pizza suffisamment rigide pour être manipulée et consommée comme sandwich, la dite enveloppe comportant une garniture alimentaire interne. La présente invention se rapporte également au procédé de fabrication de tels produits et à l'installation industrielle de fabrication correspondante.

La présente invention concerne un procédé de fabrication d'un produit alimentaire, à base de pâte à pizza, du genre pizza, dans lequel :
- on prépare au moins un fond de pâte,
- on dispose une garniture alimentaire sur ledit fond de pâte,
- on recouvre ladite garniture par une abaisse supérieure formant couvercle,
- et on assure la cuisson du produit ainsi réalisé en vue d'obtenir un produit alimentaire suffisamment rigide pour être manipulé et consommé comme un sandwich.

La présente invention concerne également un produit alimentaire, à base de pâte à pizza, du genre pizza, tarte, quiche par exemple, comprenant une enveloppe de pâte suffisamment rigide pour être manipulée et consommée comme un sandwich, ladite enveloppe comportant une garniture alimentaire interne.

L'invention concerne enfin une installation de fabrication d'un produit alimentaire à base de pâte à pizza, du genre pizza, comportant :
- au moins un poste de pétrissage, de fabrication et de préparation d'un fond de pâte,
- au moins un poste de laminage et/ou extrusion de la pâte, pour former une enveloppe comportant une abaisse supérieure continue avec le reste de l'enveloppe,
- au moins un poste de découpe de la pâte en portions,
- au moins un poste de garnissage d'une garniture alimentaire sur la pâte laminée ou extrudée et/ou découpée,
- au moins un poste de cuisson et un ensemble de convoyeurs reliant les divers postes.

Le développement actuel de la restauration dite « *restauration rapide »* est à l'origine de l'apparition de produits alimentaires comestibles devant satisfaire bon nombre de contraintes nouvelles. Ainsi, il est apparu qu'en plus de leurs qualités propres et fondamentales liées à leurs qualités gustatives, les produits destinés à la restauration rapide devaient pouvoir être réchauffés rapidement tout en étant susceptibles d'être consommés à la main et donc d'une rigidité et d'un format de préhension adapté, et ce afin de s'adapter au concept de restauration rapide excluant le recours à tous les équipements annexes de restauration classique, du genre équipement de cuisson et de cuisine, table, chaise, assiette et couverts notamment.

### TECHNIQUE ANTERIEURE

Dans le domaine des produits alimentaires comestibles du type mentionné précédemment, il est déjà connu de réaliser un produit de type pizza constitué d'une enveloppe fermée formant un étui dans lequel est disposée une garniture alimentaire classique et connue en tant que telle. Un tel produit est obtenu à l'aide d'un procédé de fabrication dans lequel on a recours à deux étapes distinctes de cuisson, et a deux couches de pâte différentes. Dans un premier temps, la pizza est réalisée à l'aide d'une première couche de pâte sur laquelle on dispose une garniture alimentaire, ce premier ensemble étant ensuite cuit dans un four. Le premier ensemble est ensuite revêtu d'une seconde couche de pâte complètement opaque enfermant de manière hermétique le premier ensemble. Le second ensemble subit ensuite une seconde étape de cuisson pour réaliser le produit alimentaire final.

Un tel produit se présente sous la forme d'une enveloppe fermée, qui peut être manipulée et consommée comme un sandwich après une phase préalable de réchauffage.

Le procédé de fabrication et le produit obtenu, s'il s'adapte au concept de restauration rapide défini précédemment, n'en souffre pas moins d'un certain nombre de désavantages. Ainsi, en premier lieu, le procédé de fabrication s'avère relativement complexe à mettre en oeuvre dans la mesure où il nécessite deux étapes distinctes de réalisation du produit, associées à deux étapes de cuisson également distinctes. Le recours à deux étapes de cuisson a également une incidence sur la qualité gustative du produit final dans la mesure où une partie du produit est soumise à deux étapes successives de cuisson, ce qui n'est pas favorable au maintien d'une bonne souplesse de la pâte alors même que le produit fini est destiné à être soumis à une opération de réchauffage ultime. Au total, les produits alimentaires comestibles obtenus selon la technique connue sont amenés à subir un nombre trop élevé de phases de cuisson préjudiciables au maintien de l'ensemble des qualités gustatives du produit.

En outre, l'aspect complètement fermé et hermétique de ce produit implique une étape de réchauffage ultime relativement longue, et pouvant induire une surcuisson relative, si l'on souhaite atteindre une température satisfaisante des produits ainsi que de la garniture alimentaire.

Il est déjà connu de réaliser des produits alimentaires divers, à base de pâte traditionnelle fourrée à base de deux couches de pâte, tel que décrit dans US-A-4 618 498 ou d'une seule couche simplement incisée, tel que décrit dans GB-A-2 305 350. Les procédés et dispositifs décrits ne concernent pas des produits alimentaires à base de pâte à pizza, dont le comportement mécanique nécessite un procédé et un dispositif spécifique et particulièrement adapté à sa manipulation pour obtenir un produit fini acceptable par le consommateur.

### EXPOSE DE L'INVENTION

L'objet de la présente invention vise en conséquence à proposer un nouveau procédé et une nouvelle installation de fabrication d'un produit alimentaire comestible à base de pâte à pizza ainsi qu'un nouveau produit alimentaire comestible à base de pâte à pizza en tant que tel qui ne présentent pas les divers inconvénients énumérés précédemment et qui soient à même de conduire à une simplification du procédé et de l'installation de fabrication ainsi que du procédé obtenu tout en améliorant la qualité gustative du produit final obtenu.

Un autre objet de l'invention vise à proposer un nouveau procédé et une nouvelle installation de fabrication d'un produit alimentaire qui soient susceptibles d'être bien adaptés à l'utilisation de pâte à pizza et à sa manipulation dans le cadre d'un procédé industriel.

Un autre objet de l'invention vise à proposer un nouveau procédé et installation de fabrication d'un produit alimentaire comestible à base de pâte à pizza ainsi qu'un nouveau produit qui soient facilement industrialisables.

Un autre objet de l'invention est de proposer un nouveau produit alimentaire à base de pâte à pizza, du genre pizza, qui soit à même de conserver une bonne qualité gustative malgré un cycle final de réchauffage.

Un autre objet de l'invention vise à proposer un nouveau produit alimentaire, du genre pizza, tarte, quiche par exemple, qui soit d'un aspect extérieur particulièrement attractif.

Un autre objet de l'invention est de fournir un nouveau procédé et une nouvelle installation de fabrication d'un produit alimentaire qui soient adaptés à la fabrication de produits alimentaires à base de pâte à pizza incluant des ingrédients alimentaires de type liquide.

Les objets assignés à l'invention sont atteints à l'aide d'un procédé de fabrication d'un produit alimentaire, du genre pizza, tarte, quiche par exemple, dans lequel :
- on prépare au moins un fond de pâte,
- on dispose une garniture alimentaire sur ledit fond de pâte,
- on recouvre ladite garniture par une abaisse supérieure formant couvercle,
- et on assure la cuisson du produit ainsi réalisé en vue d'obtenir un produit suffisamment rigide pour être manipulé et consommé comme un sandwich,
caractérisé en ce qu'il consiste :
- à réaliser le fond de pâte et l'abaisse supérieure en continuité à partir d'un même fond de pâte initial, l'abaisse supérieure étant formée de bords longitudinaux et latéraux,
- à réaliser au moins une ouverture, et de préférence une série d'ouvertures, dans les bords, par enlèvement de matière,
- à plier, puis rabattre les bords longitudinaux sur la garniture, avec un léger chevauchement,
- puis à border par soudage les bords longitudinaux et latéraux pour sceller le produit alimentaire.

Les objets assignés à l'invention sont atteints à l'aide d'un produit alimentaire, à base de pâte à pizza, du genre pizza, comprenant une enveloppe de pâte suffisamment rigide pour être manipulée et consommée comme un sandwich, ladite enveloppe comprenant une garniture alimentaire interne, caractérisé en ce que l'enveloppe comporte une abaisse supérieure pourvue d'au moins une ouverture réalisée par enlèvement de matière, et de préférence d'une série d'ouvertures, l'abaisse supérieure étant formée d'une couche de pâte continue avec le reste de l'enveloppe et de bords rabattus, repliés et fermés sur la garniture et/ou le reste de l'enveloppe.

Les objets assignés à l'invention sont atteints à l'aide d'une installation de fabrication d'un produit alimentaire à base de pâte à pizza, du genre pizza, comportant :
- au moins un poste de pétrissage et fabrication d'un fond de pâte
- au moins un poste de laminage et/ou extrusion de la pâte, pour former par une enveloppe comportant une abaisse supérieure continue avec le reste de l'enveloppe,
- au moins un poste de découpe de la pâte en portions,
- au moins un poste de garnissage alimentaire sur la pâte laminée ou extrudée, et/ou découpée,
- au moins un poste de cuisson et un ensemble de convoyeurs reliant les divers postes,
caractérisée en ce qu'elle comporte
- au moins un poste de perforation pour réaliser au moins une ouverture par enlèvement de matière, et de préférence une série d'ouvertures, dans l'abaisse supérieure,
- et au moins un poste de pliage pour replier sur la garniture les bords dépliés de l'abaisse supérieure.

### DESCRIPTION DES FIGURES

D'autres détails et avantages de l'invention seront décrits de manière détaillée à la lumière de la description et des exemples illustratifs qui suivent ci-après, donnés uniquement à titre d'exemples, non limitatifs dans lesquels :
- la figure 1 montre, selon une vue partielle et en perspective, un fond de pâte destiné à former un produit alimentaire comestible conforme à l'invention.
- la figure 2 illustre, selon une vue en coupe transversale schématique du dessus d'un boyau de pâte destiné à former un produit alimentaire comestible conforme à l'invention.
- la figure 3 illustre, selon une vue en coupe transversale partielle et en perspective, un exemple de réalisation d'un produit alimentaire comestible conforme à l'invention.
- la figure 4 illustre, selon une vue de dessus, un autre exemple de réalisation d'une pâte dépliée à plat destinée à réaliser un produit alimentaire comestible conforme à l'invention.
- la figure 5 illustre un premier schéma de principe d'une installation de fabrication conforme à l'invention.
- la figure 6 illustre un second schéma de principe d'une variante de réalisation d'une installation de fabrication conforme à l'invention.

### MEILLEURE MANIERE DE REALISER L'INVENTION

Dans la description qui suit, il sera plus particulièrement fait référence à un procédé, une installation de fabrication et un produit alimentaire comestible présenté et décrit comme étant à base de pâte à pizza et étant du type « *pizza* ». En aucune manière, l'objet et la portée de l'invention ne sauraient être limités à un procédé, une installation de fabrication et un produit alimentaire comestible limité à cette appellation particulière, étant entendu que l'objet de l'invention peut s'appliquer à tout produit alimentaire comestible du type pizza, tarte, quiche, flamiche, ou autre, dès l'instant qu'il s'agit d'un produit alimentaire comestible réalisé à base de pâte à pizza et se présentant sous la forme d'une portion individuelle de pâte cuite, puis éventuellement réchauffée, incluant une garniture alimentaire enrobée d'une enveloppe de pâte, l'ensemble étant suffisamment rigide pour que le produit final puisse être consommé et manipulé comme un sandwich.

Au sens de l'invention, le produit alimentaire sera réalisé à base de pâte à pizza, la forme du produit alimentaire pouvant également être diverse, par exemple, carrée, ronde, ovale, rectangulaire, octogonale etc.

Au sens de l'invention, la garniture alimentaire formant la partie interne du produit alimentaire pourra également être quelconque, de type sucrée ou salée et comprendre de manière non limitative des légumes de toutes sortes, de la viande, des saucisses, des sauces et condiments divers, des fruits, etc.

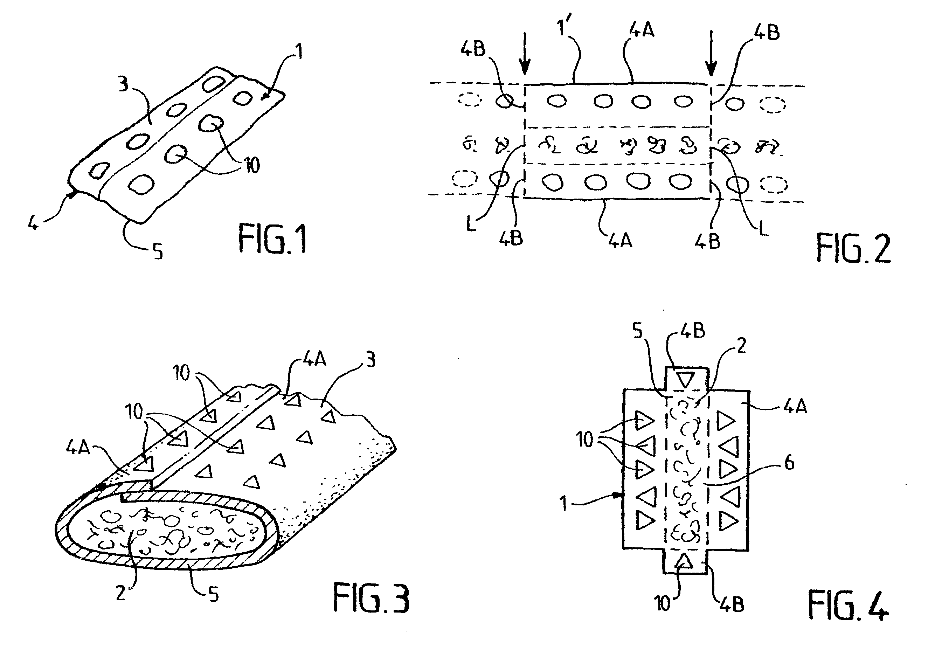

Le produit alimentaire comestible, du genre pizza, tarte, quiche par exemple, montré aux figures 1 à 4, comprend une enveloppe de pâte 1 délimitant un volume fermé, ladite enveloppe étant, après cuisson devenue suffisamment rigide pour pouvoir être manipulée et consommée à la manière d'un sandwich, c'est-à-dire ne nécessitant pas d'être supporté par un support plan, du genre assiette, pour pouvoir être manipulée, découpée puis ingérée. L'enveloppe 1 comprend intérieurement une garniture alimentaire 2 formant la partie interne de l'enveloppe.

Selon la variante de réalisation montrée aux figures 1 et 2, le produit alimentaire conforme à l'invention est réalisé sous la forme d'une enveloppe 1 comprenant une abaisse supérieure 3 formée d'une couche de pâte continue avec le reste de l'enveloppe 1 et soudée par son contour périphérique 4 au reste de l'enveloppe 1 formant une abaisse inférieure 5.

Selon une caractéristique importante de l'invention, l'abaisse supérieure 3 est pourvue d'au moins une et de préférence d'une série d'ouvertures 10, de formes, de tailles, de dispositions, et de nombre variables et quelconques, et réalisées par enlèvement de matière.

Dans les exemples illustrés aux figures 1 à 4, les ouvertures 10 ont été montrées à titre d'exemples non limitatifs comme étant de formes circulaires légèrement ovalisées, ou triangulaires, tout en étant disposées sous la forme de lignes sensiblement parallèles sur l'abaisse supérieure 3.

La réalisation d'ajourages, de perforations ou d'ouvertures 10 dans l'abaisse supérieure 3 a pour fonction particulièrement avantageuse :
- de permettre une cuisson rapide du produit et de la garniture dans les fours traditionnels par amélioration du transfert thermique,
- d'assurer à l'utilisateur la vision directe de la garniture alimentaire présente dans le produit,
- de pouvoir répandre les sauces et condiments au travers desdites ouvertures 10 et donc de personnaliser éventuellement le produit,
- de favoriser également un réchauffage rapide du produit en raison de l'amélioration du transfert thermique sans risque d' obérer la qualité du produit, là où les ouvertures 10 de l'abaisse supérieure 3 permettant également de conférer un aspect esthétique amélioré au produit dans la mesure où les découpes extérieures des perforations 10 peuvent être adaptées.

La présence des perforations 10 permet également de réaliser un bon compromis entre souplesse et rigidité de la pâte tout en réduisant la quantité de pâte utilisée et donc le coût de fabrication.

Selon les variantes de réalisation montrées aux figures 1 à 4, l'enveloppe 1 est réalisée à partir d'une couche de pâte continue entre l'abaisse inférieure 5 et l'abaisse supérieure 3. Selon cette variante de réalisation, l'abaisse supérieure 3 est formée d'une couche de pâte continue avec le reste de l'enveloppe 1, l'abaisse supérieure 3 étant formée de bords longitudinaux 4A et latéraux 48, rabattus, repliés et fermés sur la garniture 2 et/ou le reste de l'enveloppe 1 avec un léger chevauchement longitudinal. Telle qu'illustrée en particulier aux figures 1 à 4, l'enveloppe 1 est réalisé à partir d'une seule pièce de pâte de forme, par exemple sensiblement rectangulaire, la partie centrale 6 étant recouverte de la garniture alimentaire 2. Avantageusement, la forme dépliée de l'enveloppe est rectangulaire (figure 2). Selon une variante (figure 4), la partie centrale 6 est pourvue de deux bords longitudinaux 4A dépliés, et de deux bords latéraux 4B formant une excroissance. La ou les ouvertures 10 sont réalisées dans les bords latéraux 4B et longitudinaux 4A, par exemple sous la forme d'ajourages triangulaires alignés. Dans sa forme repliée, telle qu'illustrée à la figure 3, les bords latéraux 4B sont repliés sur la garniture 2, les bords longitudinaux 4A étant ensuite repliés, l'un des bords venant recouvrir l'autre et étant soudé à ce dernier lors de la cuisson.

Le procédé de fabrication d'un produit alimentaire, du genre pizza, tarte, quiche par exemple, conforme à l'invention, est un procédé dans lequel :
- on prépare au moins un fond de pâte,
- puis on dispose une garniture alimentaire 2 sur ledit fond de pâte,
- on recouvre ensuite ladite garniture par une abaisse supérieure 3 destinée à former le couvercle du produit,
- et on assure enfin la cuisson du produit ainsi réalisé en vue d'obtenir un produit suffisamment rigide pour être manipulé et consommé comme un sandwich.

Selon l'invention, la particularité du procédé consiste :
- à réaliser le fond de pâte et l'abaisse supérieure en continuité à partir d'un même fond de pâte initial, l'abaisse supérieure étant formée de bords longitudinaux et latéraux,
- à réaliser au moins une ouverture, et de préférence une série d'ouvertures, dans les bords par enlèvement de matière,
- à plier, puis rabattre les bords longitudinaux sur la garniture, avec un léger chevauchement,
- puis à border par soudage les bords longitudinaux et latéraux pour sceller le produit alimentaire.

Selon l'invention, le fond de pâte destiné à former en une seule pièce l'abaisse inférieure 5 et l'abaisse supérieure 3, est réalisé à l'aide de pâtes classiques à pizza généralement non précuites. Le procédé conforme à l'invention permet en conséquence et consiste à assurer la cuisson du produit garni en une seule et unique phase de cuisson pour aboutir au produit alimentaire final rigide qui n'a plus alors qu'à être réchauffé ultérieurement.

Le procédé selon l'invention permet également de réaliser le fond de pâte de l'abaisse supérieure 3 en continuité à partir d'un même pâton initial, l'abaisse supérieure 3 formant, tel qu'illustré sur les figures 2 et 4, par exemple, les bords longitudinaux 4A et latéraux 4B externes du pâton initial. De manière classique, le pâton peut provenir d'une masse initiale de pâte, étalée par exemple par laminage et/ou extrusion puis scindée en une série de pâtons identiques formant l'enveloppe 1 rectangulaire (figure 2). Selon cette variante, le procédé consiste à réaliser le fond de pâte et l'abaisse supérieure 3 à partir d'un boyau continu 1' et à assurer l'individualisation du produit par sectionnement du boyau après le pliage des bords longitudinaux 4A et 4B, selon les lignes L.

Avantageusement, le procédé consiste à réaliser simultanément le sectionnement du boyau continu selon les lignes L et le soudage des bords latéraux 4B. Néanmoins, il est envisageable de réaliser le fond de pâte et l'abaisse supérieure 3 à partir d'un fond de pâte individualisé, et donc pré-découpé en portions, de préférence rectangulaire.

Tel qu'illustré sur la figure 4, le fond de pâte est obtenu par découpage d'une forme définie, par exemple de forme générale sensiblement carrée ou rectangulaire, avec deux bords latéraux externes 4B. Dans ce cas, les parties du fond de pâte ou de l'enveloppe 1 destinées à être repliées sur les côtés et sur le dessus de la garniture 2 sont préalablement perforés pour réaliser la ou les ouvertures 10 avant ou après le dépôt de la garniture alimentaire 2 dans la partie centrale 6. Le procédé selon l'invention consiste alors à recouvrir la garniture 2 par pliage de l'abaisse supérieure 3 sur la garniture 2. Pour cela, les bords latéraux 4B et longitudinaux 4A sont repliés sur le dessus de la garniture 2 selon deux lignes de pliage en faisant chevaucher légèrement entre eux les bords 4A et 4B. Selon une variante de réalisation, il est bien évidemment possible de supprimer le chevauchement en découpant les extérieurs de bords 4A et 4B suivant des angles appropriés.

Bien évidemment, il est également envisageable de supprimer l'opération particulière de découpe spécifique des bords latéraux 4B et 4A formant l'abaisse supérieure 3. En effet, la réalisation d'un produit alimentaire comestible conforme à l'invention selon un morceau initial de pâte unique peut se limiter à la découpe initiale de la pièce unique, sans qu'il soit nécessaire d'opérer les découpes spécifiques des bords 4B et 4A. Selon l'invention, il est donc possible de se limiter à découper une seule pièce unique de départ, de forme circulaire par exemple, et de replier avec ou sans chevauchement les bords périphériques.

Selon l'invention, il est possible de réaliser les ouvertures 10 avant l'étape de dépose de la garniture 2 sur la partie centrale 6.

Selon l'invention, le procédé consiste de manière avantageuse à réaliser une série d'ouvertures 10, de formes et de tailles sensiblement identiques dans l'abaisse supérieure 3.

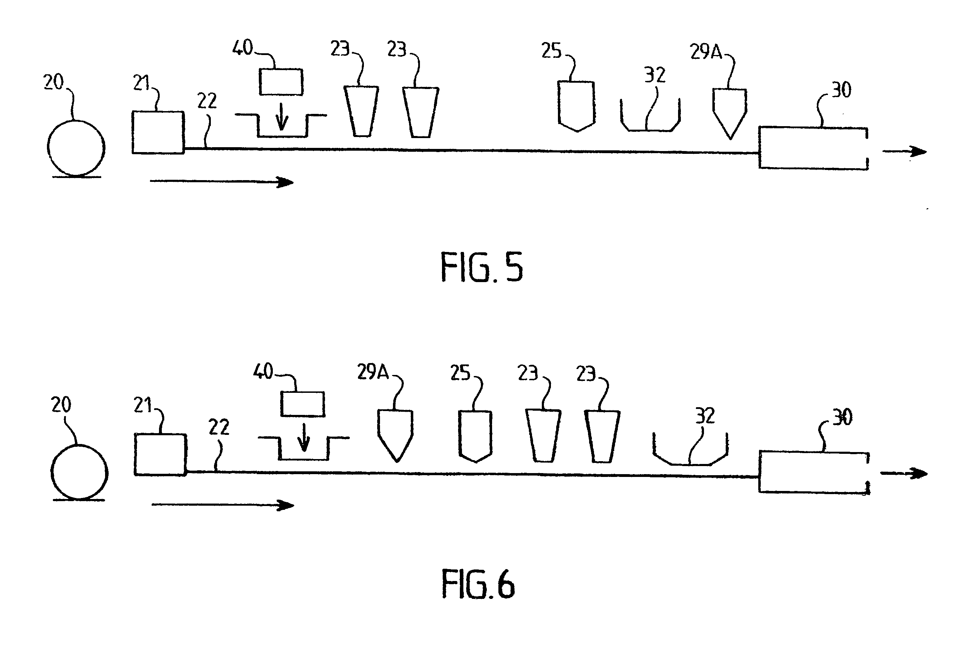

Selon une version particulièrement avantageuse de l'invention, le procédé peut consister à préparer le fond de pâte par emboutissage dudit fond dans un moule, préalablement ou simultanément à la dépose de la garniture alimentaire 2 et à l'étape de réalisation de la ou des séries d'ouvertures 10 (figures 5 et 8).

La réalisation du fond de pâte par emboutissage est particulièrement utile lorsque la garniture alimentaire 2 comprend un ou plusieurs ingrédients liquide ou semi-liquides destinés à se solidifier ultérieurement lors de la phase de cuisson. Ceci est le cas par exemple lors de la réalisation de quiches ou flans. Dans une telle situation, l'utilisation d'un moule pourvu de bords latéraux relevés permet de déposer une bande de pâte laminée ou extrudée issue d'un pâton initial dans son volume interne, puis par emboutissage classique dudit pâton de faire épouser les bords du moule par les bords périphériques relevés de la pâte. Il s'avère ainsi possible, lors de l'étape de dépose de la garniture alimentaire 2 d'y inclure des ingrédients liquides sans que ces derniers s'écoulent en dehors des produits dépliés. L'emboutissage du fond de pâte peut être appliqué aux variantes de l'invention impliquant une abaisse inférieure 5 séparée de l'abaisse supérieure 3 ou impliquant un produit alimentaire monocouche. L'étape de perçage de la série d'ouverture 10 peut être réalisé simultanément à l'opération d'emboutissage ou après. L'étape de dépose de la garniture alimentaire peut être effectuée simultanément à l'emboutissage ou après.

L'invention se rapporte également à une installation de fabrication d'un produit alimentaire à base de pâte à pizza, du genre pizza, tel qu'illustrée aux figures 5 et 6.

Selon l'invention, l'installation comporte au moins un poste de pétrissage et de fabrication 20 du fond de pâte crue. De manière classique et connue en tant que tel, un tel poste est formé d'un ou plusieurs rouleaux pétrisseurs ou malaxeurs.

L'installation comporte ensuite au moins un poste de laminage et/ou d'extrusion 21 de la pâte crue, qui permet de réaliser, en association avec un système de convoyage 22, une bande en continu du fond de pâte formée par une enveloppe 1 comportant une abaisse supérieure 3 continue avec le reste de l'enveloppe 1.

L'installation de fabrication conforme à l'invention comprend également un ou plusieurs postes de garnissage 23 destinés à déposer sur le fond de pâte laminé et extrudé et/ou découpé les ingrédients constituant la garniture alimentaire 2. De tels postes peuvent être de type manuel ou automatique tel que cela est bien connu dans le domaine agro-alimentaire. Les ingrédients formants la garniture alimentaire 2 peuvent ainsi être distribués par un ou plusieurs doseurs automatiques, ou manuellement, par exemple à travers une série de caches correspondant à la forme de base du produit fini.

Dans le cas de la réalisation d'un produit alimentaire conforme à l'invention, l'installation de fabrication conforme à l'invention comprend, tel qu'illustré aux figures 5 et 6, un poste de perforation 25 destiné à réaliser au moins une ouverture 10, et de préférence une série d'ouvertures 10, dans l'abaisse supérieure 3.

L'installation comporte ensuite un poste de pliage 32, manuel ou automatique, destiné à plier et souder l'abaisse inférieure 5 avec l'abaisse supérieure 3.

L'installation comporte, avantageusement en fin d'installation, un poste de découpe 29A de la pâte en une série de portions pour constituer des parts du produit alimentaire.

Enfin, l'installation conforme à l'invention comprend, vers sa partie terminale, un poste de cuisson 30 dans lequel la pâte non cuite constituant le produit est soumise à une étape de cuisson.

L'installation de fabrication conforme à l'invention et illustrée à la figure 6 concerne une installation destinée à réaliser un produit alimentaire comestible à partir d'une seule couche de pâte. Cette variante d'installation ne diffère des variantes précédentes que par la disposition particulière du poste de préparation de l'abaisse supérieure 3 comportant au moins un poste de découpage 29A de l'abaisse supérieure 3. Un tel poste assure également le formage des bords dépliés, respectivement longitudinaux 4A et latéraux 4B de l'abaisse à partir du fond de pâte. Un tel poste est incorporé, de préférence, en amont du poste de perforation 25. A titre de variante complémentaire (non montrée aux figures), le poste de découpage 29A peut être associé au poste de perforation 25 pour former un seul poste mixte, assurant en une seule opération le découpage et la perforation. L'association des postes de découpage et de perforation en un seul poste peut d'ailleurs être appliquée à toutes les variantes de réalisation de l'invention. Cette variante de réalisation comporte également, vers la fin de l'installation, un poste de pliage 32 assurant le repliement des bords longitudinaux 4A et par exemple 4B de l'abaisse supérieure 3. Selon cette réalisation, le poste de préparation de l'abaisse supérieure 3 est associé et confondu avec le poste de pétrissage et de fabrication 21 du fond de pâte.

L'installation ainsi réalisée s'avère relativement simple à mettre en oeuvre et permet d'obtenir un produit alimentaire dont la fabrication est facilement automatisée.

A titre de variante particulièrement intéressante, il est possible d'inclure dans l'un des quelconques des schémas d'installation illustrés aux figures 5 à 6 un poste d'emboutissage 40, par exemple immédiatement en amont du poste de garnissage 23 approprié pour réaliser un fond de pâte embouti.

### POSSIBLITE D'APPLICATION INDUSTRIELLE

L'invention trouve son application industrielle dans la fabrication de pizza pour restauration rapide.

## Revendications

1. Procédé de fabrication d'un produit alimentaire, à base de pâte à pizza, du genre pizza, dans lequel :
- on prépare au moins un fond de pâte,
- on dispose une garniture alimentaire (2) sur ledit fond de pâte,
- on recouvre ladite garniture (2) par une abaisse supérieure (3) formant couvercle,
- et on assure la cuisson du produit ainsi réalisé en vue d'obtenir un produit suffisamment rigide pour être manipulé et consommé comme un sandwich,
**caractérisé en ce qu'**il consiste :
à réaliser le fond de pâte et l'abaisse supérieure (3) en continuité à partir d'un même fond de pâte initial, l'abaisse supérieure (3) étant formée de bords longitudinaux (4A) et latéraux (4B),
- à réaliser au moins une ouverture (10), et de préférence une série d'ouvertures (10), dans les bords (4A, 4B) par enlèvement de matière,
- à plier, puis rabattre les bords longitudinaux sur la garniture, avec un léger chevauchement,
- puis à border par soudage les bords longitudinaux (4A) et latéraux (4B) pour sceller le produit alimentaire.

2. Procédé selon la revendication 1 **caractérisé en ce qu'**il consiste à réaliser le fond de pâte et l'abaisse supérieure à partir d'un boyau continu (1') et à assurer l'individualisation du produit par sectionnement du boyau après le pliage des bords longitudinaux (4A).

3. Procédé selon la revendication 2 **caractérisé en ce qu'**il consiste à réaliser simultanément le sectionnement du boyau (1') continu et le soudage des bords latéraux (4B).

4. Procédé selon la revendication 1 **caractérisé en ce qu'**il consiste à réaliser le fond de pâte et l'abaisse supérieure (3) à partir d'un fond de pâte individualisé, de préférence sensiblement rectangulaire.

5. Procédé selon l'une des revendications 1 à 4 **caractérisé en ce qu'**il consiste à réaliser les ouvertures (10) avant l'étape de dépose de la garniture (2).

6. Procédé selon l'une des revendications 1 à 5 **caractérisé en ce qu'**il consiste à réaliser des ouvertures (10) sensiblement identiques.

7. Procédé selon l'une des revendications 1 à 6 **caractérisé en ce qu'**il consiste à assurer la cuisson du produit en une seule et unique phase de cuisson.

8. Procédé selon les revendications 1 à 7 **caractérisé en ce qu'**il consiste à préparer le fond de pâte par emboutissage dudit fond dans un moule (40), préalablement ou simultanément à la dépose de garniture (20) et à la réalisation de la série d'ouvertures (10).

9. Produit alimentaire, à base de pâte à pizza, du genre pizza, comprenant une enveloppe (1) de pâte suffisamment rigide pour être manipulée et consommée comme un sandwich, ladite enveloppe (1) comprenant une garniture alimentaire (2) interne, **caractérisé en ce que** l'enveloppe (1) comporte une abaisse supérieure (3) pourvue d'au moins une ouverture (10) réalisée par enlèvement de matière, et de préférence d'une série d'ouvertures (10), l'abaisse supérieure (3) étant formée d'une couche de pâte continue avec le reste de l'enveloppe (1) et de bords rabattus (4A, 4B), repliés et fermés sur la garniture (2) et/ou le reste de l'enveloppe.

10. Produit selon la revendication 9 **caractérisé en ce qu'**il est de forme sensiblement ovale ou circulaire ou rectangulaire.

11. Installation de fabrication d'un produit alimentaire à base de pâte à pizza, du genre pizza, comportant
- au moins un poste de pétrissage et fabrication (20) d'un fond de pâte,
- au moins un poste de laminage et/ou extrusion (21) de la pâte, pour former par une enveloppe comportant une abaisse supérieure continue avec le reste de l'enveloppe,
- au moins un poste de découpe (29) de la pâte en portions,
- au moins un poste de garnissage (23) alimentaire sur la pâte laminée ou extrudée, et/ou découpée,
- au moins un poste de cuisson (30) et un ensemble de convoyeurs (22, 26) reliant les divers postes,
**caractérisée en ce qu'**elle comporte
- au moins un poste de perforation (25) pour réaliser au moins une ouverture (10) par enlèvement de matière, et de préférence une série d'ouvertures (10) dans l'abaisse supérieure (3),
- et au moins un poste de pliage (32) pour replier sur la garniture (2) les bords dépliés (4A, 4B) de l'abaisse supérieure.

12. Installation selon la revendication 11 **caractérisée en ce qu'**elle comporte au moins un poste d'emboutissage (40) du fond de pâte.

## Patentansprüche

1. Verfahren zur Herstellung eines Nahrungsmittels auf Basis von Pizzateig, nach Pizza-Art, bei dem
- man mindestens einen Teigboden zubereitet,
- man eine Lage Nahrungsmittel (2) auf den Teigboden aufträgt,
- man die Lage Nahrungsmittel (2) mit einer oberen Umlage (3) bedeckt, die einen Deckel bildet,
- man das Backen des so erhaltenen Mittels soweit gewährleistet, dass ein zur Handhabung und zum Verbrauch als Sandwich ausreichend festes Mittel erhalten wird,
**dadurch gekennzeichnet, dass** es besteht aus:
Herstellen des Teigbodens und der oberen Umlage (3) zusammen hängend aus einem anfänglichen Teigboden, wobei die obere Umlage (3) gebildet wird aus länglichen (4A) und seitlichen (4B) Rändern,
- Herstellen mindestens einer Öffnung (10) und vorzugsweise einer Reihe von Öffnungen (10) in den Rändern (4A, 4B) durch Entnahme von Substanz,
- Falten und dann Umlegen der länglichen Ränder auf die Lage mit einer leichten Überlappung,
- dann Einfassen durch Verschmelzen der länglichen (4A) und seitlichen (4B) Ränder zum Verschließen des Nahrungsmittels.

2. Verfahren gemäß Anspruch 1, **dadurch gekennzeichnet, dass** es besteht aus Herstellen des Teigbodens und der oberen Umlage (3) aus einem kontinuierlichen Schlauch (1') und dem Gewährleisten der Individualisierung des Mittels mittels Trennung des Schlauchs nach dem Falten der länglichen Ränder (4A).

3. Verfahren gemäß Anspruch 2, **dadurch gekennzeichnet, dass** es besteht aus gleichzeitigem Umsetzen der Trennung des kontinuierlichen Schlauchs (1') und dem Verschmelzen der seitlichen Ränder (4B).

4. Verfahren gemäß Anspruch 1, **dadurch gekennzeichnet, dass** es besteht aus Herstellen des Teigbodens und der oberen Umlage (3) aus einem einzelnen, vorzugsweise im wesentlichen rechteckigen Teigboden.

5. Verfahren gemäß einem der Ansprüche 1 bis 4, **dadurch gekennzeichnet, dass** es besteht aus Herstellen der Öffnungen (10) vor dem Schritt des Aufbringens der Lage.

6. Verfahren gemäß einem der Ansprüche 1 bis 5, **dadurch gekennzeichnet, dass** es besteht aus Herstellen von im wesentlichen gleichen Öffnungen (10).

7. Verfahren gemäß einem der Ansprüche 1 bis 6, **dadurch gekennzeichnet, dass** es besteht aus Gewährleisten des Backens des Mittels in einem einzigen Backvorgang.

8. Verfahren gemäß einem der Ansprüche 1 bis 7, **dadurch gekennzeichnet, dass** es besteht aus Zubereiten des Teigbodens durch Eindrücken des Bodens in eine Form (40) vor oder gleichzeitig mit dem Aufbringen der Lage (20) und dem Herstellen der Reihe von Öffnungen (10).

9. Nahrungsmittel auf Basis von Pizzateig, nach Pizza-Art mit einer ausreichend festen Teighülle (1) zur Handhabung und zum Verbrauch als Sandwich, wobei diese Hülle (1) eine innere Lebensmittellage (2) aufweist, **dadurch gekennzeichnet, dass** die Hülle (1) eine obere Umlage (3) mit mindestens einer Öffnung (10) aufweist, die durch Entnahme von Substanz hergestellt wird, und vorzugsweise eine Reihe Öffnungen (10), wobei die obere Umlage (3) gebildet ist aus einer kontinuierlichen Teigschicht mit dem Rest der Hülle (1) und den auf der Lage (2) und/oder dem Rest der Hülle umgeschlagenen, gefalteten und geschlossenen Rändern (4A, 4B).

10. Mittel gemäß dem Anspruch 9, **dadurch gekennzeichnet, dass** es im wesentlichen ovale oder kreisförmige oder rechteckige Form aufweist.

11. Anlage zur Herstellung eines Nahrungsmittel auf Basis von Pizzateig, nach Pizza-Art mit
- mindestens einer Knet- und Herstellungsstation (20) des Teigbodens,
- mindestens einer Schichtungs- und/oder Extrusionsstation (20) des Teigs, um mittels einer Hülle mit einer oberen kontinuierlichen Umlage mit dem Rest der Hülle zu bilden:
- mindestens eine Schneidstation (29) des Teigs in Portionen,
- mindestens eine Station zum Belegen (23) des geschichteten oder extrudierten und/oder geschnittenen Teigs mit Lebensmitteln,
- mindestens eine Station zum Backen (30) und eine Fördereinrichtung (22, 26) zum Verbinden der verschiedenen Stationen,
**dadurch gekennzeichnet, dass** vorgesehen ist
- mindestens eine Station zum Perforieren (25) um mindestens eine Öffnung herzustellen durch Entnahme von Substanz, und vorzugsweise eine Reihe Öffnungen (10) in der oberen Umlage (3), und
- mindestens eine Station zum Falten (3) um auf die Lage (2) die entfalteten Ränder (4A, 4B) der oberen Umlage (3) zu falten.

12. Anlage gemäß dem Anspruch 11, **dadurch gekennzeichnet, dass** sie mindestens eine Station zum Eindrücken (40) des Teigbodens aufweist.

## Claims

1. Method of manufacturing a food product based on pizza dough, of the pizza type, in which:
- at least one dough base is prepared,
- a food filling (2) is disposed on the said dough base,
- the said filling (2) is covered with a top piece of rolled dough (3) forming a cover,
- and the product thus produced is cooked in order to obtain a product which is sufficiently rigid to be handled and consumed like a sandwich,
**characterised in that** it consists of:
producing the dough base and the top piece of rolled dough (3) continuously from the same initial dough base, the top piece of rolled dough (3) being formed by longitudinal (4A) and lateral (4B) edges,
- producing at least one opening (10), and preferably a series of openings (10), in the edges (4A, 4B) by removal of material,
- bending and then folding over the longitudinal edges on the filling, with a slight overlap,
- then trimming the longitudinal (4A) and lateral (4B) edges by joining in order to seal the food product.

2. Method according to Claim 1, **characterised in that** it consists of producing the dough base and top piece of rolled dough from a continuous length of casing (1') and individualising the product by cutting the length of casing after the folding of the longitudinal edges (4A).

3. Method according to Claim 2, **characterised in that** it consists of simultaneously carrying out the cutting of the continuous length of casing (1') and the joining of the lateral edges (4B).

4. Method according to Claim 1, **characterised in that** it consists of producing the dough base and the top piece of rolled dough (3) from an individualised dough base, preferably substantially rectangular.

5. Method according to one of Claims 1 to 4, **characterised in that** it consists of producing the openings (10) before the step of depositing the filling (2).

6. Method according to one of Claims 1 to 5, **characterised in that** it consists of producing substantially identical openings (10).

7. Method according to one of Claims 1 to 6, **characterised in that** it consists of carrying out the cooking of the product in a single cooking stage.

8. Method according to Claims 1 to 7, **characterised in that** it consists of preparing the dough base by pressing the said base in a mould (40), prior to or simultaneously with the depositing of the filling (20) and the producing of the series of openings (10).

9. Food product, based on pizza dough, of the pizza type, comprising a dough envelope (1) which is sufficiently rigid to be handled and consumed like a sandwich, the said envelope (1) comprising an internal food filling (2), **characterised in that** the envelope (1) comprises a top piece of rolled dough (3) provided with at least one opening (10) produced by removal of material, and preferably a series of openings (10), the top piece of rolled dough (3) being formed by a continuous layer of dough with the remainder of the envelope (1) and folded over edges (4A, 4B) folded and- closed on the filling (2) and/or the remainder of the envelope.

10. Product according to Claim 9, **characterised in that** it is substantially oval or circular or rectangular in shape.

11. Installation for manufacturing a food product based on pizza dough, of the pizza type comprising:
- at least one station (20) for kneading and manufacturing a dough base,
- at least one station (21) for rolling and/or extruding the dough, in order to form an envelope comprising a top piece of rolled dough continuous with the remainder of the envelope,
- at least one station (29) for cutting the dough into portions,
- at least one station (23) for placing the food filling on the rolled or extruded and/or cut dough,
- at least one cooking station (30) and a set of conveyors (22, 26) connecting the various stations,
**characterised in that** it comprises
- at least one perforation station (25) for producing at least one opening (10) by removal of material, and preferably a series of openings (10), in the top piece of rolled dough (3),
- and at least one folding station (32) for folding the unfolded edges (4A, 4B) of the top piece of rolled dough over the filling (2).

12. Installation according to Claim 11, **characterised in that** it comprises at least one station (40) for pressing the dough base.
